# EUROPEAN PATENT APPLICATION

(11) **EP 2 884 421 A1**
(43) Date of publication of application: **17.06.2015**
(21) Application number: 14194822.4
(22) Date of filing: 25.11.2014
(51) Int. Cl.: G06K 7/10, G06K 7/14

(54) **High dynamic-range indicia reading system**

(30) Priority: 10.12.2013 US 201314101965
(71) Applicant: Hand Held Products, Inc., Fort Mill, SC 29707 (US)
(72) Inventor: Xian, Tao, Morristown, New Jersey 07962-2245 (US)
(74) Representative: Houghton, Mark Phillip

(57) **Abstract**

An indicia-reading system is provided that adjusts the intensity of an indicia signal to an optimal level in an efficient and timely manner. The indicia-reading system incorporates an indicia-capturing subsystem for acquiring an indicia signal, a gain adjustment subsystem, and an indicia decoding subsystem. The gain adjustment subsystem derives a plurality of derivative signals from the indicia signal. At least two of the derivative signals have different gain adjustments from one another. The indicia-decoding subsystem is configured to decode at least one of the derivative signals.

## Description

### FIELD OF THE INVENTION

The present invention relates to indicia readers, such as barcode readers. More specifically, the present invention relates to dynamic-range indicia reading systems.

### BACKGROUND

Indicia readers, such as barcode scanners, are typically configured to acquire information from indicia and then decode that information for use in data systems. Advanced signal processing techniques beneficially aid in the decoding of indicia in circumstances where the signal representing the indicia information is outside of the nominal range. For example, reading indicia positioned at a greater distance from the indicia reader tends to increase signal interference and decrease signal strength. Similarly, signals resulting from attempts to read an indicia relatively close to the indicia reader (e.g., in the near field) tends to result in increased signal strength. The signal strength may be too intense for the indicia reader to decode.

To deal with the challenges presented by indicia at widely varying distances from the indicia reader, and therefore to configure indicia readers to have large depths of field, many indicia readers incorporate automatic gain control (AGC) technology. Using this technique, indicia readers adjust the signal received from the indicia to fall within an optimal range through the use of automatic gain control circuits. If the signal received from the indicia is too strong, the automatic gain control reduces the intensity. If the signal received from the indicia is too weak, the automatic gain control increases the signal's intensity.

While automatic gain control can improve the dynamic range of an indicia reader, it does have drawbacks that can diminish the effectiveness of the indicia reader. In particular, the reliance on automatic gain control can result in delays in decoding that are manifested as lag experienced by the user during attempts to scan indicia.

Therefore, a need exists for an indicia-reading system with the capacity to decode signals across a large dynamic range in a more efficient and timely fashion.

### SUMMARY

Accordingly, in one aspect, the present invention embraces an indicia-reading system that includes an indicia-capturing subsystem for acquiring an indicia signal. The indicia-reading system also includes a gain adjustment subsystem for deriving from the indicia signal a plurality of derivative signals. At least two of the derivative signals have different gain adjustments from one another. The indicia-reading system also includes an indicia-decoding subsystem configured for decoding at least one of the derivative signals.

In one embodiment, the indicia-capturing subsystem is configured to acquire information about barcode symbols within the indicia-capturing subsystem's field of view.

In another embodiment, the indicia-capturing subsystem is a laser scanning subsystem for scanning indicia within the laser scanning subsystem's field of view.

In yet another embodiment, the indicia-capturing subsystem includes a laser source for projecting laser light toward indicia, and a photodiode for collecting laser light reflected from the indicia.

In yet another embodiment, the gain adjustment subsystem is configured to derive from the indicia signal at least two derivative signals that have different non-zero gain adjustments relative to the indicia signal.

In yet another embodiment, the gain adjustment subsystem is configured to derive from the indicia signal a plurality of derivative signals, each derivative signal having a unique gain adjustment.

In yet another embodiment, the gain adjustment subsystem includes one or more amplifiers.

In yet another embodiment, the gain adjustment subsystem includes a cascade amplifier.

In yet another embodiment, the indicia-decoding subsystem is configured to process the derivative signals in series.

In yet another embodiment, the indicia-decoding subsystem is configured to process the derivative signals in parallel.

In another aspect, the present invention embraces an indicia-reading system that includes an indicia-capturing subsystem for acquiring an indicia signal. The indicia-capturing subsystem includes (*i*) a laser source for projecting laser light toward indicia and (*ii*) a photodiode for collecting laser light reflected from the indicia. The indicia-reading system also includes a gain adjustment subsystem for deriving from the indicia signal a plurality of derivative signals. Each derivative signal has a unique gain adjustment. The indicia-reading system also includes an indicia-decoding subsystem configured for decoding at least one of the derivative signals.

In another aspect, the present invention embraces an indicia-reading method. An indicia signal that provides information about indicia is acquired. A plurality of derivative signals is derived from the indicia signal, wherein at least two of the derivative signals have different gain adjustments from one another. At least one of the derivative signals is decoded.

In one embodiment, the step of deriving from the indicia signal a plurality of derivative signals includes amplifying the indicia signal at different gain adjustments.

The foregoing illustrative summary, as well as other exemplary objectives and/or advantages of the invention, and the manner in which the same are accomplished, are further explained within the following detailed description and its accompanying drawings.

### BRIEF DESCRIPTION OF THE DRAWINGS

Figure 1 is a block diagram illustrating an exemplary indicia-reading system according to the present invention.
Figure 2 is a block diagram illustrating an alternative embodiment of an exemplary indicia-reading system according to the present invention

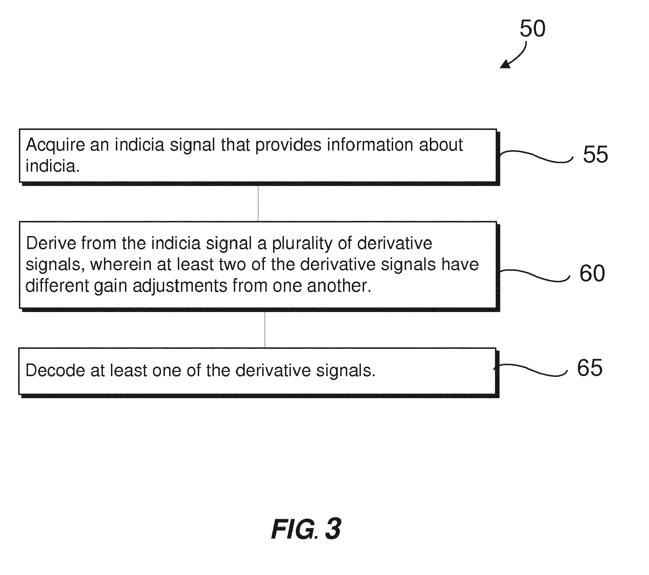

Figure 3 is a flow chart illustrating an exemplary indicia-reading method according to the present invention.
Figure 4 is a flow chart illustrating an alternative embodiment of an exemplary indicia-reading method according to the present invention.

### DETAILED DESCRIPTION

The present invention embraces an indicia-reading system. The term indicia is intended to refer broadly to various types of machine-readable indicia, including barcodes, QR codes, matrix codes, 1D codes, and 2D codes, RFID tags, near-field communication smartchips, machine-readable characters, etc. The indicia are typically graphical representations of information (*e.g.,* data) such as product numbers, package tracking numbers, or personnel identification numbers. The use of indicia readers to input data into a system, rather than manual data entry, results in generally faster and more reliable data entry. The indicia-reading system according to the present invention may embrace various kinds of devices used to read indicia, such as handheld barcode scanners, fixed-position omni-directional barcode scanners, pen-type readers, laser scanners, CCD readers, imaging scanners, and mobile devices like smartphones that are equipped to read indicia, and similar devices.

The indicia-reading system according to the present invention attempts to adjust the signal received from the indicia to an intensity level that can be successfully decoded by converting the signal into a pre-determined number of derivative signals modulated to varying amplitudes. Typically, the degree of adjustment that is applied to the original signal to generate each derivative signal is informed by the predicted degrees of variation of the original signal from the optimal level.

This approach of adjusting the gain of the original signal reflected from the insignia by a predetermined number and degree of gain adjustments substantially alleviates a significant drawback of relying on automatic gain control techniques. Because automatic gain control typically adjusts the intensity of the original signal based upon the maximum amplitude (e.g., peak amplitude) of the signal, it is susceptible to overcompensating for peaks (e.g., spikes) in the original signal that are not related to the indicia. For example, when an indicia reader's laser moves along a sweep angle within the indicia reader's field of view, the optical signal may reflect off not only the indicia but also off highly reflective material such as stainless steel. This would be the case when, for example, an indicia-bearing label is affixed to a stainless steel surface of a container or other object. When the indicia reader analyzes the electrical signal that is generated from the reflected optical signal, it will detect that a portion of the electrical signal is more intense than optimal. To compensate for this peak in intensity, automatic gain control is employed to adjust the gain to reduce the intensity of the entire electrical signal. Although this may well bring the portion of the electrical signal representing the highly reflective background object (e.g., the stainless steel surface), it will likely reduce the intensity of that portion of the electrical signal representing the indicia to such a degree that the electrical signal is too weak for the indicia reader to decode. In other words, the automatic gain control may wash out the most important portion of the electrical signal -- the portion generated from the laser light reflected from the indicia.

The indicia-reading system according to the present invention substantially avoids this problem of overcompensation. Rather than adjusting the electrical signal based upon the detected peak (or trough) amplitude of the signal, the indicia-reading system applies a plurality of fixed-level gain adjustments. These gain adjustments are typically calculated by incorporating the anticipated (e.g., likely) amount that the electrical signal will vary from optimal levels during normal use of the indicia-reading system. For example, if the indicia-reading system is intended to have a dynamic operating range of between 1 foot and 50 feet from the indicia-reading system, then the indicia-reading system could include one pre-determined gain adjustment level that would be likely to adjust the intensity of a signal received from a distance of 50 feet to an optimal intensity level sufficient for decoding the signal. The indicia-reading system could also include a second pre-determined gain adjustment level that would be likely to adjust the intensity of a signal received from a distance of, for example, 25 feet to an optimal intensity level. The indicia-reading system might also include another gain adjustment level that, when applied to a signal received from an indicia positioned 3 feet from the system, would result in a signal intensity that the system could successfully decode.

It will be appreciated by a person of ordinary skill in the art that electrical signals that are derived from optical signals reflected off of indicia are typically too weak to successfully decode. Consequently, pre-amplification techniques are employed to increase the signal intensity prior to initiating the decoding process. It will be appreciated that the gain adjustment techniques of the indicia-reading system according to the present invention are typically employed after the original electrical signal has already been pre-amplified.

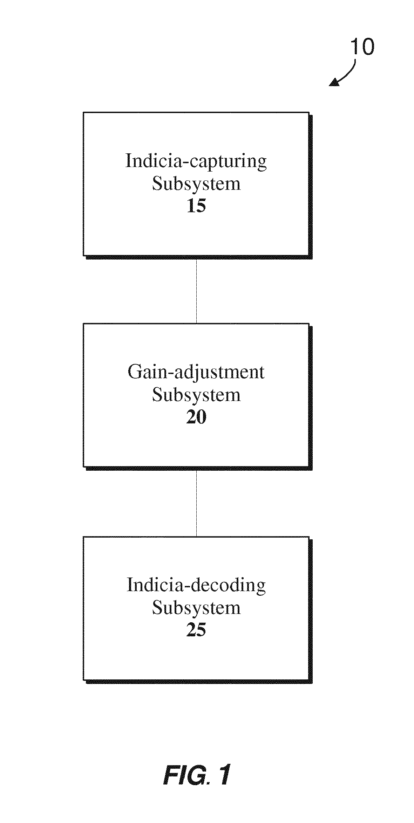

Referring now to Figure 1, the indicia-reading system 10 according to the present invention includes an indicia-capturing subsystem 15 for acquiring an indicia signal. The indicia-capturing subsystem 15 acquires information about indicia within the indicia-capturing subsystem's field of view. Typically, an object that bears the indicia is placed within the field of view of the indicia-capturing subsystem 15. Alternatively, the indicia-capturing subsystem 15 is repositioned so that the object bearing the indicia is brought into the field of view of the indicia-capturing subsystem 15. The indicia-capturing subsystem 15 acquires an indicia signal based upon the indicia within its field of view. Typically, the indicia signal is an electronic signal that represents the information (e.g., data) encoded by the indicia. The electrical signal may be acquired by converting another type of signal (e.g., an optical signal).

The indicia-reading system 10 also includes a gain adjustment subsystem 20. The gain adjustment subsystem 20 serves to create multiple copies of the indicia signal and to manipulate the gain of each of these copies to facilitate the decoding of the indicia signal. The gain adjustment subsystem 20 derives from the indicia signal a plurality of derivative signals. Typically, the indicia signal is split (*e.g.,* by a signal-splitting module) into derivative signals. The derivative signals are representative of the same information, and splitting the indicia signal into a plurality of derivative signals allows these derivative signals to be used for separate but related purposes.

The indicia-reading system 10 attempts to obtain a usable (*e.g.,* decodable) version of the indicia signal by modifying the intensity of the indicia signal in varying ways. By increasing or decreasing the intensity of the indicia signal by varying amounts, the indicia-reading system 10 develops a finite collection of derivative signals that can be quickly analyzed to determine if any one of the derivative signals are decodable. In addition to creating a plurality of derivative signals from the original indicia signal, therefore, the gain adjustment subsystem 20 also adjusts the gain of each derivative signal with respect to the indicia signal. In other words, when the gain adjustment subsystem 20 creates a derivative signal from the indicia signal, the gain adjustment subsystem 20 applies a gain adjustment to the indicia signal to create a derivative signal having an amplitude (*e.g.,* voltage amplitude) that is either greater than, less than, or equal to the amplitude of the indicia signal. Typically, the gain adjustment subsystem 20 receives the indicia signal from the indicia-capturing subsystem 25. As will be appreciated by a person of ordinary skill in the art, a gain adjustment of greater than one results in a derivative signal having a greater amplitude than the indicia signal; a gain adjustment of less than one results in a derivative signal having a lesser amplitude than the indicia signal; and a gain adjustment of one results in a derivative signal having the same amplitude as the indicia signal.

Typically, the gain adjustment subsystem 20 includes an electronic amplifier (i.e., amplifier). More typically, the gain adjustment subsystem 20 includes more than one amplifier. The gain adjustment subsystem 20 may include a cascade amplifier. The cascade amplifier utilizes a series of amplifiers in which each amplifier generates a derivative signal in addition to sending its output to the input of the next amplifier in a daisy chain. In this way, each level of the cascade amplifier generates a derivative signal having a gain adjustment while passing a copy of the derivative signal on to the next amplifier for further amplification to create yet another derivative signal.

The gain adjustment subsystem 20 may also include an attenuator for reducing the intensity of the indicia signal to generate a derivative signal having a lesser amplitude than the indicia signal. In other words, the gain adjustment subsystem 20 may employ an attenuator to apply a gain adjustment of less than one. Reduction in the intensity of the indicia signal may increase the likelihood of decoding the indicia signal in cases where the indicia signal is too intense to decode. For example, the intensity of the indicia signal may be too great to decode in situations where the indicia is closer in distance from the indicia-reading system 10 than is anticipated under normal operating conditions. When the indicia is especially close to the indicia-reading system 10, the reflected light does not have as much time to dissipate as it would when the indicia is at greater distances. As a result, the reflected light is more intense. Similarly, the intensity of the indicia signal may be too great to decode in situations where the material on which the indicia is printed is of a greater reflectivity. In this case, the light projected from the indicia-capturing subsystem 15 reflects off the indicia at a greater intensity than it would with less reflective materials, thereby resulting in a more intense indicia signal. In situations such as these, reducing the intensity of the indicia signal by applying a gain adjustment of less than zero increases the likelihood that the indicia signal will be within a range that can be successfully decoded by the indicia-reading system 10.

After the gain adjustment subsystem 20 of the indicia-reading system 10 according to the present invention derives the plurality of derivative signals from the indicia signal, at least two of the derivative signals have different gain adjustments from one another. As a result, at least two of the derivative signals have different amplitudes. Typically, each of the derivative signals has different gain adjustments from the other derivative signals, meaning that each of the derivative signals has a different amplitude. The difference in magnitude between the different gain adjustments may vary depending on the application. Typically, for applications that require the indicia-reading system 10 to read indicia across a large dynamic range, the difference in magnitude between the different gain adjustments is relatively large. For example, where the indicia-reading system 10 is used to read indicia that are a few meters away from the indicia-reading system 10 (e.g., about 2 meters) as well as indicia that are several meters away from the indicia-reading system 10 (e.g., about 60 meters), the difference in magnitude between the gain adjustments of the derivative signals may be relatively great. Conversely, where the indicia reader is not required to have as large of a dynamic range, then the difference in magnitude between the gain adjustments of the derivative signals may be relatively small. The difference in magnitude between the gain adjustments of the derivative signals may also depend on the number of derivative signals utilized by the indicia-reading system 10.

In an alternative embodiment of the indicia-reading system 10 according to the present invention, the gain adjustment subsystem 20 is configured to derive from the indicia signal at least two derivative signals that have different non-zero gain adjustments relative to the indicia signal. In other words, in this alternative embodiment, when the gain adjustment subsystem 20 processes the indicia signal, it generates at least two derivative signals having different amplitudes from the indicia signal.

In another alternative embodiment of the indicia-reading system 10 according to the present invention, the gain adjustment subsystem 20 is configured to derive from the indicia signal a plurality of derivative signals, with each derivative signal having a unique gain adjustment. In other words, when the gain adjustment subsystem 20 processes the indicia signal, the gain adjustment subsystem 20 applies a different gain adjustment to generate each of the plurality derivative signals that are output from the gain adjustment subsystem 20. For example, an exemplary gain adjustment subsystem 20 might apply gain adjustments having the following values: -10 dB, 0 dB, 3 dB, 10 dB, 20 dB. In this example, the output of the gain adjustment subsystem 20 would be five distinct derivative signals.

The derivative signals are transmitted to an indicia-decoding subsystem 25. The indicia-decoding subsystem 25 is configured for decoding at least one of the derivative signals. The indicia-decoding subsystem 25 comprises computer hardware and/or software configured to decode derivative signals. The indicia-decoding subsystem 25 may be configured to process each derivative signal in series (e.g., serially) until the indicia-decoding subsystem 25 successfully decodes one of the derivative signals. Alternatively, the indicia-decoding subsystem 25 may be configured for parallel processing of some or all of the derivative signals. When one of the derivative signals is successfully decoded, the decoding process is interrupted.

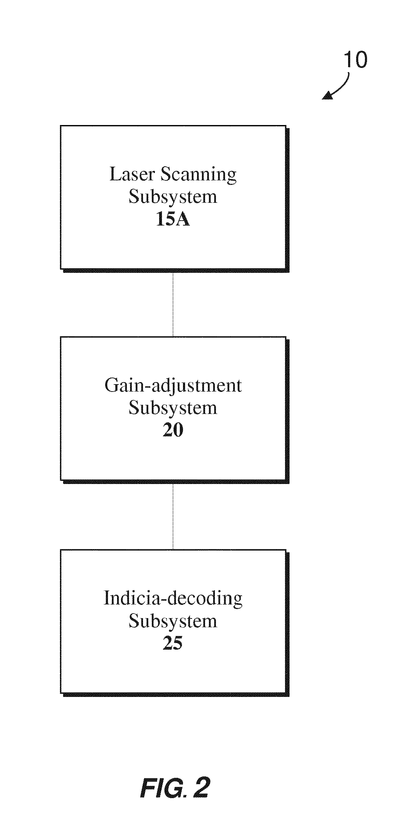

As depicted in Figure 2, in one embodiment of the indicia-reading system 10 according to the present invention, the indicia-capturing subsystem 15 is a laser scanning subsystem 15A. The laser scanning subsystem 15A includes a laser source for projecting laser light toward indicia within the laser scanning subsystem's field of view. Typically, the laser scanning subsystem 15A sweeps a laser beam back and forth at a sweep angle. The laser-scanning subsystem 15A then receives the optical signals that reflect or scatter off the indicia. Typically, the optical signal is collected by the laser scanning subsystem 15A via a photoreceptor (*e.g.,* photodiode), and is converted into an electrical signal representing the indicia signal.

In the case of a barcode, for example, the light that reflects off of the light-colored (e.g., white) portions of the barcode return to the laser scanning subsystem 15A as a more intense optical signal, which is then translated into a more intense indicia signal. Conversely, the light that reflects off the dark-colored (*e.g.,* black) portions of the barcode return to the laser scanning subsystem 15A as a less intense optical signal. The indicia-decoding subsystem 25 is able to decode the indicia signal (*e.g.,* in the form of derivative signals) by analyzing the duration and sequence of the changes in intensities of the indicia signal.

In an alternative embodiment, the indicia-reading system 10 may process both the original indicia signal (e.g., the raw indicia signal) and derivative signal(s) resulting from gain adjustments to the indicia signal. The indicia-decoding subsystem 25 may be configured to receive and decode the original indicia signal and derivative signals. The indicia-decoding subsystem 25 may be configured to attempt to decode the original indicia signal before any processing of the derivative signals occurs. In other words, the indicia-decoding subsystem 25 may be configured to process the original indicia signal and the derivative signals in series. If the indicia-decoding subsystem 25 is able to decode the original indicia signal, the indicia-decoding subsystem 25 does not attempt to decode the derivative signals. If, on the other hand, the indicia-decoding subsystem 25 is not able to decode the original indicia signal, it attempts to decode the derivative signals since the gain adjustments applied to create the derivative signals may increase the likelihood of a successful decoding attempt. Alternatively, the indicia-decoding subsystem 25 may be configured to attempt to decode the original indicia signal and derivative signals in parallel. As it processes the original indicia signal and derivative signals at the same time, the indicia-decoding subsystem 25 stops decoding whenever it successful decodes the original indicia signal or a derivative signal. Although this parallel approach may require more processing power, it can result in faster decoding since the decoding processes are occurring at the same time.

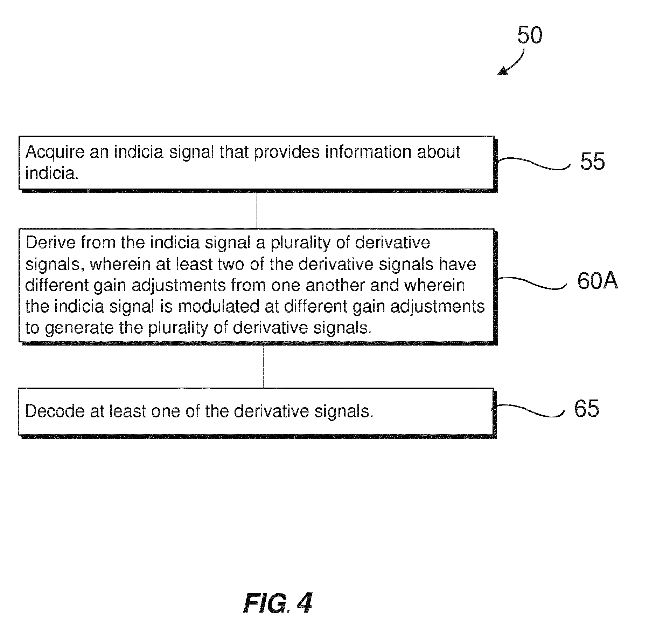

In another aspect, the present invention embraces an indicia-reading method 50. An indicia signal that provides information about indicia is acquired 55. A plurality of derivative signals is derived from the indicia signal, with at least two of the derivative signals having different gain adjustments from one another 60. At least one of the derivative signals is decoded 65. As shown in Figure 4, in an alternative embodiment of the indicia-reading method 50 according to the present invention, the indicia signal is modulated (*e.g.,* amplified) at different gain adjustments to generate the plurality of derivative signals 60A.

To supplement the present disclosure, this application incorporates entirely by reference the following patents, patent application publications, and patent applications: U.S. Patent No. 6,832,725; U.S. Patent No. 7,159,783; U.S. Patent No. 7,128,266; U.S. Patent No. 7,413,127; U.S. Patent No. 7,726,575; U.S. Patent No. 8,390,909; U.S. Patent No. 8,294,969; U.S. Patent No. 8,408,469; U.S. Patent No. 8,408,468; U.S. Patent No. 8,381,979; U.S. Patent No. 8,408,464; U.S. Patent No. 8,317,105; U.S. Patent No. 8,366,005; U.S. Patent No. 8,424,768; U.S. Patent No. 8,322,622; U.S. Patent No. 8,371,507; U.S. Patent No. 8,376,233; U.S. Patent No. 8,457,013; U.S. Patent No. 8,448,863; U.S. Patent No. 8,459,557; U.S. Patent No. 8,469,272; U.S. Patent No. 8,474,712; U.S. Patent No. 8,479,992; U.S. Patent No. 8,490,877; U.S. Patent No. 8,517,271; U.S. Patent No. 8,556,176 U.S. Patent No. 8,561,905; U.S. Patent No. 8,523,076; U.S. Patent No. 8,528,819; U.S. Patent Application Publication No. 2012/0111946; U.S. Patent Application Publication No. 2012/0223141; U.S. Patent Application Publication No. 2012/0193423; U.S. Patent Application Publication No. 2012/0203647; U.S. Patent Application Publication No. 2012/0248188; U.S. Patent Application Publication No. 2012/0228382; U.S. Patent Application Publication No. 2012/0193407; U.S. Patent Application Publication No. 2012/0168511; U.S. Patent Application Publication No. 2012/0168512; U.S. Patent Application Publication No. 2010/0177749; U.S. Patent Application Publication No. 2010/0177080; U.S. Patent Application Publication No. 2010/0177707; U.S. Patent Application Publication No. 2010/0177076; U.S. Patent Application Publication No. 2009/0134221; U.S. Patent Application Publication No. 2012/0318869; U.S. Patent Application Publication No. 2013/0043312; U.S. Patent Application Publication No. 2013/0068840; U.S. Patent Application Publication No. 2013/0070322; U.S. Patent Application Publication No. 2013/0075168; U.S. Patent Application Publication No. 2013/0056285; U.S. Patent Application Publication No. 2013/0075464; U.S. Patent Application Publication No. 2013/0082104; U.S. Patent Application Publication No. 2010/0225757; U.S. Patent Application Publication No. 2013/0175343; U.S. Patent Application No. 13/347,193 for a *Hybrid-Type Bioptical Laser Scanning And Digital Imaging System Employing Digital Imager With Field Of View Overlapping Field Of Field Of Laser Scanning Subsystem,* filed January 10, 2012 (Kearney *et al.*); U.S. Patent Application No. 13/367,047 for *Laser Scanning Modules Embodying Silicone Scan Element With Torsional Hinges,* filed February 6, 2012 (Feng *et al.*); U.S. Patent Application No. 13/400,748 for a *Laser Scanning Bar Code Symbol Reading System Having Intelligent Scan Sweep Angle Adjustment Capabilities Over The Working Range Of The System For Optimized Bar Code Symbol Reading Performance,* filed February 21, 2012 (Wilz); U.S. Patent Application No. 13/432,197 for a *Laser Scanning System Using Laser Beam Sources For Producing Long And Short Wavelengths In Combination With Beam-Waist Extending Optics To Extend The Depth Of Field Thereof While Resolving High Resolution Bar Code Symbols Having Minimum Code Element Widths,* filed March 28, 2012 (Havens et *al.*); U.S. Patent Application No. 13/492,883 for a *Laser Scanning Module With Rotatably Adjustable Laser Scanning Assembly,* filed June 10, 2012 (Hennick *et al.*); U.S. Patent Application No. 13/367,978 for a *Laser Scanning Module Employing An Elastomeric U-Hinge Based Laser Scanning Assembly,* filed February 7, 2012 (Feng *et al.*); U.S. Patent Application No. 13/852,097 for a *System and Method for Capturing and Preserving Vehicle Event Data,* filed March 28, 2013 (Barker *et al.*); U.S. Patent Application No. 13/780,356 for a *Mobile Device Having Object*-*Identification Interface,* filed February 28, 2013 (Samek *et al.*); U.S. Patent Application No. 13/780,158 for a *Distraction Avoidance System,* filed February 28, 2013 (Sauerwein); U.S. Patent Application No. 13/784,933 for an *Integrated Dimensioning and Weighing System,* filed March 5, 2013 (McCloskey *et al.*); U.S. Patent Application No. 13/785,177 for a *Dimensioning System,* filed March 5, 2013 (McCloskey *et al.*); U.S. Patent Application No. 13/780,196 for *Android Bound Service Camera Initialization,* filed February 28, 2013 (Todeschini *et al.*); U.S. Patent Application No. 13/792,322 for a *Replaceable Connector,* filed March 11, 2013 (Skvoretz); U.S. Patent Application No. 13/780,271 for a *Vehicle Computer System with Transparent Display,* filed February 28, 2013 (Fitch *et al.*); U.S. Patent Application No. 13/736,139 for an *Electronic Device Enclosure,* filed January 8, 2013 (Chaney); U.S. Patent Application No. 13/771,508 for an *Optical Redirection Adapter,* filed February 20, 2013 (Anderson); U.S. Patent Application No. 13/750,304 for *Measuring Object Dimensions Using Mobile Computer,* filed January 25, 2013; U.S. Patent Application No. 13/471,973 for *Terminals and Methods for Dimensioning Objects,* filed May 15, 2012; U.S. Patent Application No. 13/895,846 for a *Method of Programming a Symbol Reading System,* filed April 10, 2013 (Corcoran); U.S. Patent Application No. 13/867,386 for a *Point of Sale (POS) Based Checkout System Supporting a Customer-Transparent Two-Factor Authentication Process During Product Checkout Operations,* filed April 22, 2013 (Cunningham *et al.*); U.S. Patent Application No. 13/888,884 for an *Indicia Reading System Employing Digital Gain Control,* filed May 7, 2013 (Xian *et al.*); U.S. Patent Application No. 13/895,616 for a *Laser Scanning Code Symbol Reading System Employing Multi-Channel Scan Data Signal Processing with Synchronized Digital Gain Control (SDGC) for Full Range Scanning,* filed May 16, 2013 (Xian *et al.*); U.S. Patent Application No. 13/897,512 for a *Laser Scanning Code Symbol Reading System Providing Improved Control over the Length and Intensity Characteristics of a Laser Scan Line Projected Therefrom Using Laser Source Blanking Control,* filed May 20, 2013 (Brady *et al.*); U.S. Patent Application No. 13/897,634 for a *Laser Scanning Code Symbol Reading System Employing Programmable Decode Time-Window Filtering,* filed May 20, 2013 (Wilz, Sr. *et al.*); U.S. Patent Application No. 13/902,242 for a *System For Providing A Continuous Communication Link With A Symbol Reading Device,* filed May 24, 2013 (Smith *et al.*); U.S. Patent Application No. 13/902,144, for a *System and Method for Display of Information Using a Vehicle-Mount Computer,* filed May 24, 2013 (Chamberlin); U.S. Patent Application No. 13/902,110 for a *System and Method for Display of Information Using a Vehicle-Mount Computer,* filed May 24, 2013 (Hollifield); U.S. Patent Application No. 13/912,262 for a *Method of Error Correction for 3D Imagine Device,* filed June 7, 2013 (Jovanovski *et al.*); U.S. Patent Application No. 13/912,702 for a *System and Method for Reading Code Symbols at Long Range Using Source Power Control,* filed June 7, 2013 (Xian *et al.*); U.S. Patent Application No. 13/922,339 for a *System and Method for Reading Code Symbols Using a Variable Field of View,* filed June 20, 2013 (Xian *et al*.); U.S. Patent Application No. 13/927,398 for a *Code Symbol Reading System Having Adaptive Autofocus,* filed June 26, 2013 (Todeschini); U.S. Patent Application No. 13/930,913 for a *Mobile Device Having an Improved User Interface for Reading Code Symbols,* filed June 28, 2013 (Gelay *et al.*); U.S. Patent Application No. 13/933,415 for an *Electronic Device Case,* filed July 2, 2013 (London *et al.*); U.S. Patent Application No. 13/947,296 for a *System and Method for Selectively Reading Code Symbols,* filed July 22, 2013 (Rueblinger *et al.*); U.S. Patent Application No. 13/950,544 for a *Code Symbol Reading System Having Adjustable Object Detection,* filed July 25, 2013 (Jiang); U.S. Patent Application No. 13/961,408 for a *Method for Manufacturing Laser Scanners,* filed August 7, 2013 (Saber *et al.*); U.S. Patent Application No. 13/973,315 for a *Symbol Reading System Having Predictive Diagnostics,* filed August 22, 2013 (Nahill *et al.*); U.S. Patent Application No. 13/973,354 for a *Pairing Method for Wireless Scanner via RFID,* filed August 22, 2013 (Wu et *al.);* U.S. Patent Application No. 13/974,374 for *Authenticating Parcel Consignees with Indicia Decoding Devices,* filed August 23, 2013 (Ye *et al.*); U.S. Patent Application No. 14/018,729 for a *Method for Operating a Laser Scanner,* filed September 5, 2013 (Feng *et al.*); U.S. Patent Application No. 14/019,616 for a *Device Having Light Source to Reduce Surface Pathogens,* filed September 6, 2013 (Todeschini); U.S. Patent Application No. 14/023,762 for a *Handheld Indicia Reader Having Locking Endcap,* filed September 11, 2013 (Gannon); and U.S. Patent Application No. 14/035,474 for *Augmented-Reality Signature Capture,* filed September 24, 2013 (Todeschini).

In the specification and/or figures, typical embodiments of the invention have been disclosed. The present invention is not limited to such exemplary embodiments. The use of the term "and/or" includes any and all combinations of one or more of the associated listed items. The figures are schematic representations and so are not necessarily drawn to scale. Unless otherwise noted, specific terms have been used in a generic and descriptive sense and not for purposes of limitation.

## Claims

1. An indicia-reading system, comprising:
an indicia-capturing subsystem for acquiring an indicia signal;
a gain adjustment subsystem for deriving from the indicia signal a plurality of derivative signals, wherein at least two of the derivative signals have different gain adjustments from one another; and
an indicia-decoding subsystem configured for decoding at least one of the derivative signals.

2. The system according to claim 1, wherein the indicia-capturing subsystem is configured to acquire information about barcode symbols within the indicia-capturing subsystem's field of view.

3. The system according to claim 1, wherein the indicia-capturing subsystem is a laser scanning subsystem for scanning indicia within the laser scanning subsystem's field of view.

4. The indicia-reading system according to claim 1,
wherein the indicia-decoding subsystem is configured for decoding the indicia signal.

5. The indicia-reading system according to claim 1,
wherein the gain adjustment subsystem is configured to derive from the indicia signal at least two derivative signals that have different non-zero gain adjustments relative to the indicia signal.

6. The indicia-reading system according to claim 1,
wherein the gain adjustment subsystem is configured to derive from the indicia signal a plurality of derivative signals, each derivative signal having a unique gain adjustment.

7. The indicia-reading system according to claim 1,
wherein the gain adjustment subsystem comprises one or more amplifiers.

8. The indicia-reading system according to claim 1,
wherein the gain adjustment subsystem comprises a cascade amplifier.

9. The indicia-reading system according to claim 1,
wherein the indicia-decoding subsystem is configured to process the derivative signals in series.

10. The indicia-reading system according to claim 1,
wherein the indicia-decoding subsystem is configured to process the derivative signals in parallel.

11. An indicia-reading method, comprising:
acquiring an indicia signal that provides information about indicia;
deriving from the indicia signal a plurality of derivative signals, wherein at least two the derivative signals have different gain adjustments from one another; and
decoding at least one of the derivative signals.

12. The indicia-reading method according to claim 11, wherein the step of deriving from the indicia signal a plurality of derivative signals comprises amplifying the indicia signal at different gain adjustments.

13. The indicia-reading method according to claim 11, wherein the derivative signals are processed in series.

14. The indicia-reading method according to claim 11, wherein the derivative signals are processed in parallel.

15. The indicia-reading method according to claim 11, wherein the plurality of derivative signals are derived from the indicia signal using a cascade amplifier.
